# EUROPEAN PATENT APPLICATION

(11) **EP 1 912 150 A1**
(43) Date of publication of application: **16.04.2008**
(21) Application number: 07018284.5
(22) Date of filing: 18.09.2007
(51) Int. Cl.: G06F 21/00

(54) **Device and method for restricting and managing data transmission**

(30) Priority: 18.09.2006 CN 200610153470
(71) Applicant: Seco Technology Co., Ltd., Da-An District 106 Taipei City (TW)
(72) Inventor: Chi-Neng Chung, 106 Taipei City (TW)
(74) Representative: Bittner, Thomas L.

(57) **Abstract**

A data transmission controlling device for controlling a data transmission of an electronic device is provided. The data transmission controlling device includes a switch (1a, 2a) generating a code and a switching signal; a bias circuit (1f, 2e, Cb1, Cb2, Cb3) generating a bias voltage for the electronic device; and a body (C) controlling the bias voltage generated by the bias circuit in response to the code and the switching signal received from the switch.

## Description

The present invention relates to a device and method for restricting and managing data transmission, and more particular to a device and method for restricting and managing the computer data transmission.

Due to the development of the information technology and the popularization of the computer applications, the modem people use and rely on the computers more and more in the daily life for processing or recording everything of their works and lives. For preventing the secret documents from being altered, the security of the private information in the computer becomes more and more important. Especially, the public computers, for example the computers in the customer service station or in the nursing station of the hospital, are usually facing the problems of protecting the customer's secret information and personal using state.

Among the security management issues of the computer information, the most basic one is the user controlling. The conservative design for restricting the computer use mainly includes the code lock setting of the Basic Input/Output System (BIOS), the user switching (login/logout) of the Operate System (OS) and the screen protection mode. If the user uses the code lock setting of the BIOS or the Operate System, for obtaining the security effect, he needs to close all the application software and to logout or shut down the system, which leads to the interruption of the current work. If the user chooses the code lock setting of the screen protection mode, for obtaining the security effect, he needs to wait a period of time for turning on the screen protection mode, or the information still has a high risk to be damaged.

Besides, for the family users, there are various kinds of information on the internet, but some of them are unsuitable for the teen-agers, in particular the internet game. Many teen-agers indulge in the internet game and thus their studies are retarded. For preventing the teen-agers from inappropriately or overly using the computers or internet, the appropriate control for the household computer is also necessary.

For managing the peripheral equipments of each I/O port of the computer, the users have to buy and install the exclusive restricting devices thereof. It will be a nuisance for the users as more and more peripheral managements are required.

The present invention provides a device and method for restricting and managing data transmission in the computer. In accordance with an aspect of the present invention, a data transmission controlling device is provided for controlling a data transmission of an electronic device, which includes a switch generating a code and a switching signal; a bias circuit generating a bias voltage for the electronic device; and a body controlling the bias voltage generated by the bias circuit in response to the code and the switching signal received from the switch.

According to the data transmission controlling device described above, the body further comprises a receiver receiving the code and the switching signal from the wireless switch; a memory device storing and providing a default code; and a processing device decoding the code and the switching signal obtained from the receiver, checking if the code matches with the default code and generating a control signal for controlling.

According to the data transmission controlling device described above, the memory device further stores an operating state of the bias circuit before a power off for restoring the operating state when rebooted.

According to the data transmission controlling device described above, the switch is one of a wire switch and a wireless switch, has a keyboard and controls more than one body simultaneously, wherein the default code stored in the memory device can be changed via the keyboard.

According to the, data transmission controlling device described above, further comprising a power supply electrically connected with the electronic device, wherein the electronic device is one of a PS/2 device and a USB device.

According to the data transmission controlling device described above, the switch is one of a wire switch and a wireless switch, has a keyboard and controls more than one of the body simultaneously.

In accordance with another aspect of the present invention, a central controlling device is provided for controlling a data transmission of a computer adapted to be electrically connected thereto. The central control device includes an interface card, comprising at least one input/output terminal electrically connected to the computer; at least one control apparatus electrically connected to the at least one input/output terminal and controlling the data transmission; and an input device generating a signal containing a code and a switching operation for switching the at least one control apparatus.

According to the central controlling device described above, the at least one control apparatus further comprises a receiver receiving the signal; a memory chip storing and providing a default code; a bias circuit generating a bias voltage for the electronic device; and a microprocessor decoding the signal obtained from the receiver, checking if the code matches with the default code and controls the bias circuit based on the switching operation when the code matches with the default code, wherein the memory chip further stores an operation condition of the bias circuit before powered off for restoring the operation condition when rebooted.

According to the central controlling device described above, the input device further comprises a keyboard, which the default code can be changed thereby, and/or controls a generation of the bias voltage based on the switching operation.

According to the central controlling device described above, the input device wirelessly switches on or off the at least one control apparatus.

According to the central controlling device described above, a driver of the interface card coercively switches a PS/2 device of the computer.

In accordance with another aspect of the present invention, a method for centrally controlling a data transmission of a computer adapted to be electrically connected thereto is provided. The method includes steps of (A) coercively switching off a default input/output terminal for the data transmission on a main board of the computer; (B) providing a computer interface card having a specific input/output terminal for subsitutely performing a function of the default input/output terminal; and (C) switching on/off a bias voltage generation based on a signal containing a code and a switch command for controlling the specific input/output terminal so that the data transmission is controlled.

According to the method described above, the computer interface card comprises a transmission unit, a control unit, a memory unit and a bias circuit.

Preferably, the method described above further includes inputting the signal and changing a default code stored in the memory unit by the input unit.

Preferably, the method described above further includes transmitting the signal from the input unit to the control unit by the transmission unit.

Preferably, the method described above further includes decoding the signal by the control unit, and checking if the code matches with the default code.

According to the method described above, if the decoded code does match with the default code, the control unit switches the bias circuit according to the switch command.

According to the method described above, the transmission of the signal is one of a wire and a wireless transmission.

The above contents and advantages of the present invention will become more readily apparent to those ordinarily skilled in the art after reviewing the following detailed descriptions and accompanying drawings, in which:

Fig. 1 is a schematic view of the data transmission controlling device according to a first preferred embodiment of the present invention;

Fig. 2A is a schematic view of the data transmission controlling device of Fig. 1 disposed in an I/O equipment, for example a mouse;

Fig. 2B is a schematic view of the data transmission controlling device of Fig. 1 connected to an I/O equipment, for example a mouse;

Fig. 2C is a schematic view of the data transmission controlling device of Fig. 1 disposed on an I/O connecting port inside a computer shell;

Fig. 2D is a schematic view of the data transmission controlling device of Fig. 1 connected to an I/O controlling chip on a computer main board;

Fig. 3A is a schematic view of the central controlling device according to a second preferred embodiment of the present invention;

Fig. 3B is another schematic view of the central controlling device according to a second preferred embodiment of the present invention;

Fig. 3C is a further schematic view of the central controlling device according to a second preferred embodiment of the present invention; and

Fig. 3D is further another schematic view of the central controlling device according to a second preferred embodiment of the present invention.

The present invention will now be described more specifically with reference to the following embodiments. It is to be noted that the following descriptions of preferred embodiments of this invention are presented herein for purposes of illustration and description only; it is not intended to be exhaustive or to be limited to the precise form disclosed.

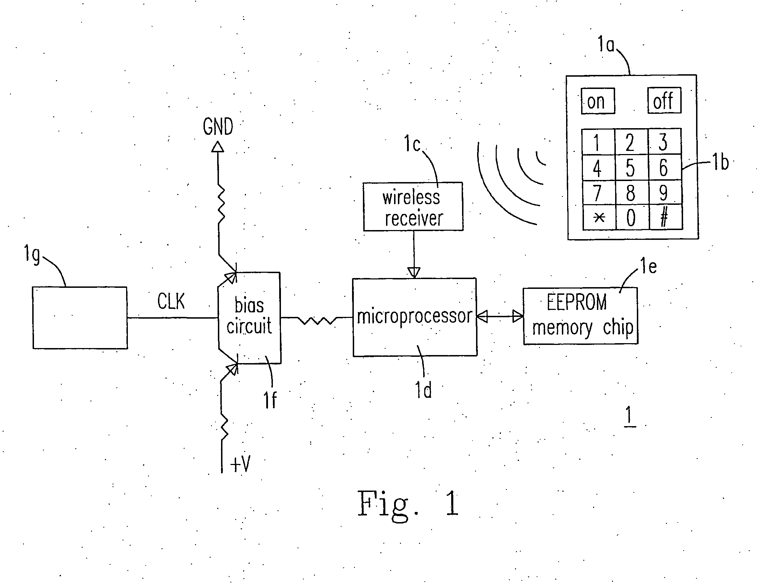

Please refer to Fig. 1, which shows a schematic view of the data transmission controlling device according to a first preferred embodiment of the present invention. The data transmission controlling device includes a wireless switch 1a having a keyboard 1b for inputting a code. The users input a code and a switching signals by operating the keyboard 1b on the wireless switch 1a, and the two signals are transmitted by the wireless switch 1a to a microprocessor 1d (for example the MIPC82E52) via a receiver 1c. The microprocessor 1d is connected to an EEPROM memory chip 1e (for example the 24c02), which stores a default code, and decodes the code signal from the receiver 1c. Then the microprocessor 1d compares the decoded code signal with the default code in the EEPROM memory chip 1e. If the decoded code signal is matched with the default code, the microprocessor 1d will accept the switching signal and turn on/off a bias circuit 1f for generating a bias to a data transmission device 1g. The bias is an unrecognizable voltage level for interfering the data transmission. Besides, while the data transmission controlling device undergoes a power cut, the EEPROM memory chip 1e can memorize the original working state therebefore. When the power is restored, the microprocessor 1d maintains the original working state according to the memory in the EEPROM memory chip 1e.

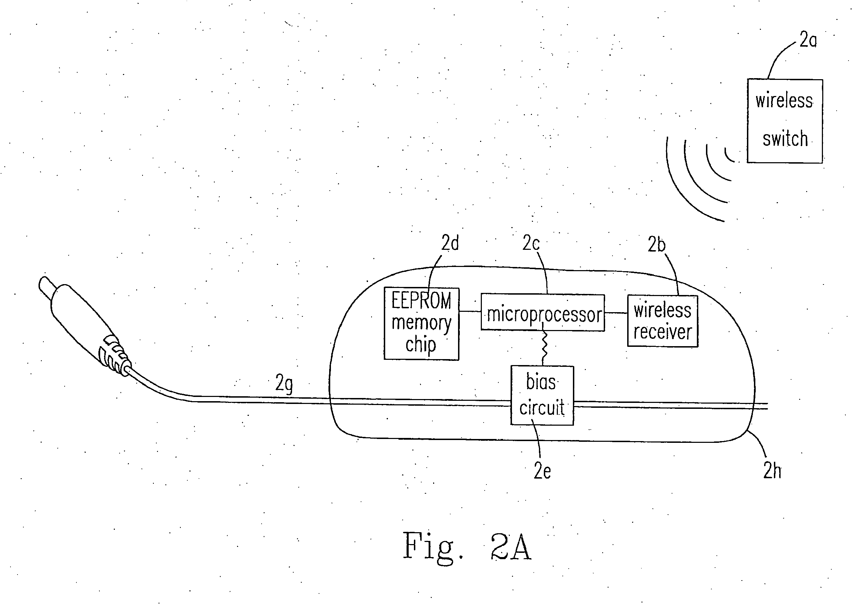

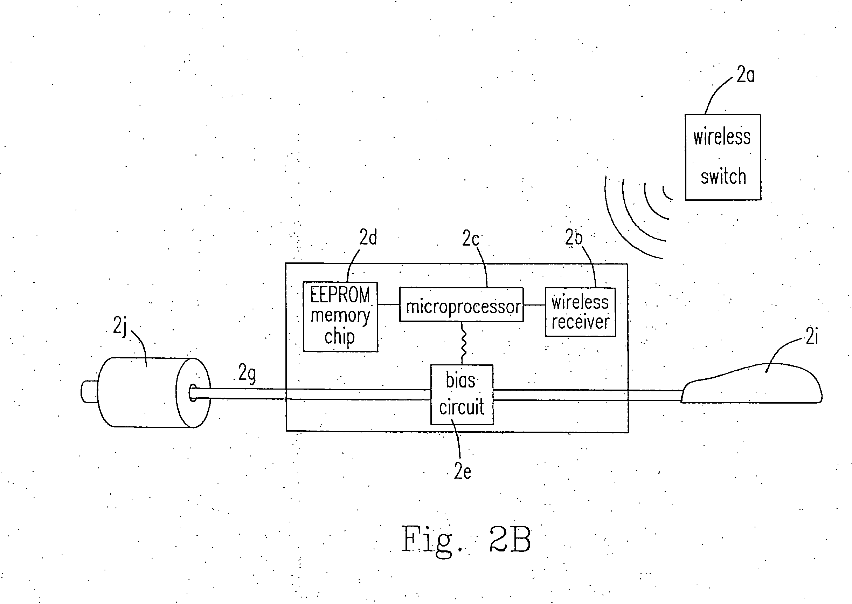

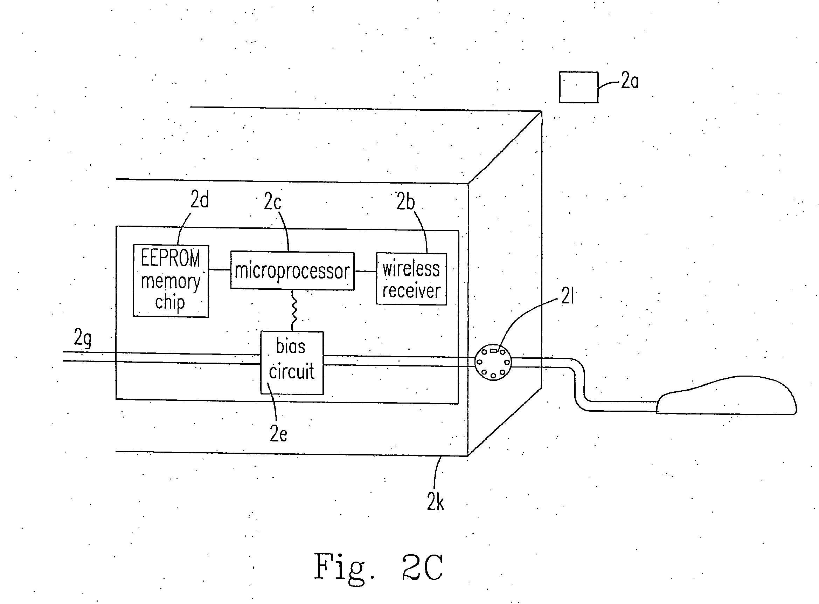

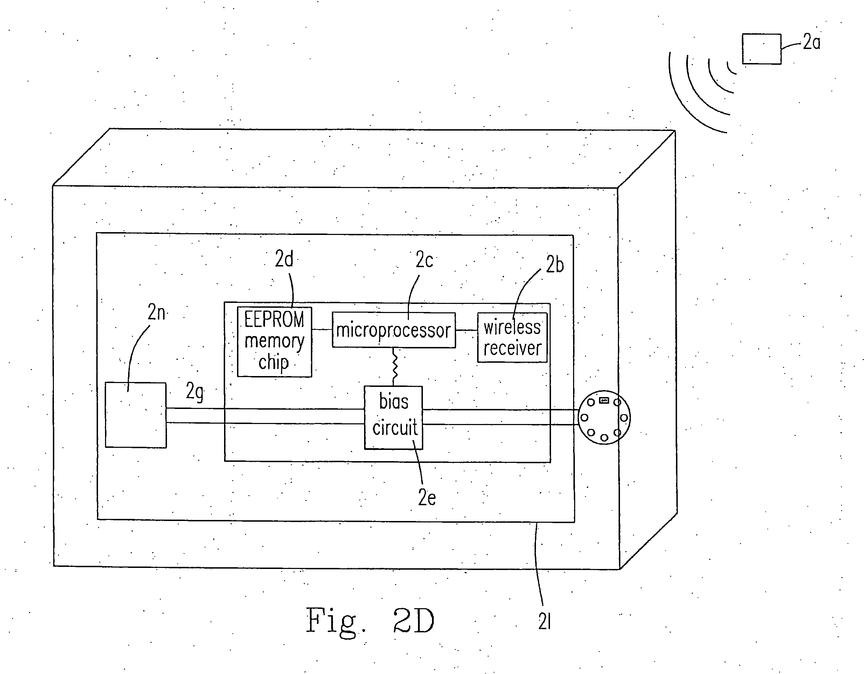

Please refer to Fig. 2, which shows a schematic view of the data transmission controlling device of Fig. 1 disposed in an I/O equipment, for example a mouse. The mouse 2f connects to the bias circuit 2e of the data transmission controlling device 2 via a signal transmission line 2g. When the bias circuit 2e is turned on and generates a bias with an unrecognizable voltage level, the signal transmitted by the mouse 2f will generate no action in the computer. The interface of the mouse 2f is a PS/2 interface or a USB interface.

The Fig. 2B shows a schematic view of the data transmission controlling device of Fig. 1 connected to an I/O equipment, for example a mouse 2h, wherein the data transmission controlling device 2 is disposed on a signal transmission line 2g or a connector 2i of the mouse 2h. The mouse 2h connects to the bias circuit 2e of the data transmission controlling device 2 via a signal transmission line 2g. When the bias circuit 2e is turned on and generates a bias with an unrecognizable voltage level, the signal transmitted from the mouse 2h will generate no action in the computer. The interface of the mouse 2f is a PS/2 interface or a USB interface.

The Fig. 2C shows a schematic view of the data transmission controlling device of Fig. 1 disposed on an I/O connecting port 2j. The data transmission controlling device 2 is disposed inside a computer shell 2k, and the bias circuit 2e is connected to the I/O connecting port 2j through a signal transmission line 2g. When the bias circuit 2e is turned on and generates a bias with an unrecognizable voltage level, the signal transmitted through the I/O connecting port 2j will generate no action in the computer. The I/O connecting port is a PS/2 port or a USB port.

The Fig. 2D shows a schematic view of the data transmission controlling device of Fig. 1 connected to an I/O controlling chip 2m on a computer main board 21. The data transmission controlling device 2 is also disposed on the computer main board 21, and the bias circuit 2e is connected to the I/O controlling chip 2m through a signal transmission line 2g. When the bias circuit 2e is turned on and generates a bias with an unrecognizable voltage level, the signal transmitted to the I/O controlling chip 2m will generate no action in the computer. The I/O controlling chip 2m is a PS/2 chip or a USB chip.

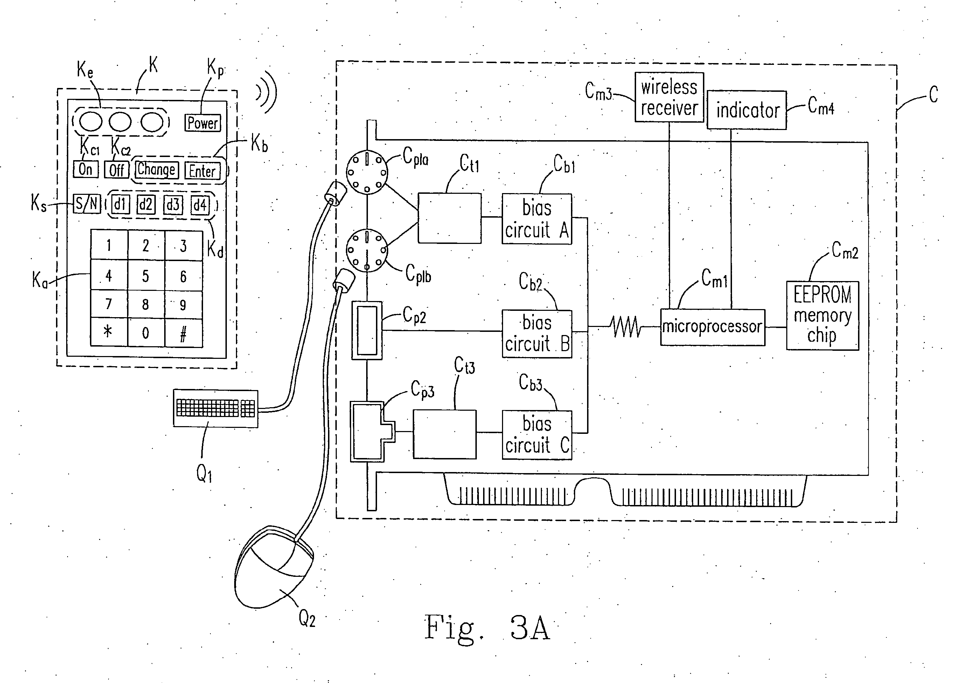

Please refer to Fig. 3A, which shows a schematic view of the central controlling device according to a second preferred embodiment of the present invention, wherein the central controlling device is an interface device C (for example the PCI interface card, the USB Root-Hub, etc.) connected to a computer main board. The interface device C has plural I/O ports for providing the connection between the computer and the peripheral equipments, such as a PS/2 port A Cp1a, a PS/2 port B Cp1b, a USB port Cp2 and an internet connection port (for example the RJ-45 port) Cp3. The PS/2 port A Cpla is able to connect to a keyboard device Q1, and the PS/2 port B Cp1b is able to connect to a mouse device Q2. Inside the interface device C, the PS/2 port A Cp 1 a and the PS/2 port B Cp 1 b both are serially and electrically connected to a PS/2-to-USB converting IC Ct1 and a bias circuit A Cb1, the internet connection port Cp3 is serially and electrically connected to a USB converting IC Ct3 and a bias circuit C Cb3, and the USB port Cp2 is directly and electrically connected to a bias circuit B Cb2. The above three bias circuits Cb1, Cb2 and Cb3 are all electrically connected to an inner microprocessor Cm1, which is electrically connected to an EEPROM memory chip Cm2, a wireless receiver Cm3 extending to the outside of the computer shell and an indicator Cm4 showing a sign that the command is completed (for example, an alarm, a light or an LCD), wherein the memory chip Cm2 stores at least one default code.

Besides, there is a wireless controlling device K having a keyboard for inputting the user commands and controlling the data transmission on the communication ports of the interface device C. The keyboard is divided into a number key Ka for inputting the code, an equipment indicating key Ke for selecting more than one interface device C, an I/O port indicating key Kd for selecting the plural I/O ports Cp1a, Cp1b, Cp2 and Cp3 on the interface device C, an open key Kc1 and a close key Kc2 for controlling the on or off state of the respective bias circuits Cb1, Cb2 and Cb3, a function key Kb for changing the code, and a power switch Kp for turning on or off the wireless controlling device K.

For controlling the data transmission from the outside of the computer, firstly, the I/O controllable interface device C should be installed on the computer main board and the driver software thereof should be installed into the operation system for recognizing the hardware, wherein the PS/2 locking program of the driver software is performed for shutting down the original PS/2 ports on the main board. Secondly, the user logouts the operation system and shuts down the original I/O ports on the main board through the BIOS thereof. Thirdly, after the user turns off the computer, all the peripheral I/O equipments connected to the main board (for example, the keyboard Q1, the mouse Q2, the printer and the internet connection line) are transferred to the corresponding I/O ports on the I/O controllable interface device C. Then, when the user restarts the computer, all the I/O ports on the interface device C are in a free state and can be operated normally. Fourthly, the user turns on the power switch Kp of the wireless controlling device K, and then operates the equipment indicating key Ke for selecting the interface device C, and then operates the I/O port indicating key Kd for selecting the I/O ports. Fifthly, the user inputs a specific code through the number key Ka and presses the close key Kc2 for generating a locking signal, and these signals will be transmitted to the microprocessor Cm1 through the wireless receiver Cm3. The microprocessor Cm1 decodes the specific code and compares it with the default codes stored in the EEPROM memory chip Cm2. If the specific code is matched with the default code, the microprocessor Cm1 will receive the locking signal and turn on a bias circuit for generating a bias with an unrecognizable voltage level. Finally, the signals transmitted from the I/O equipments on the selected I/O ports of the selected interface device will be interfered and restricted by the bias.

Notably, in the above-mentioned process, the code can control an I/O port, a set of I/O ports with similar functions, an entire interface device or a combination thereof.

The indicator Cm4, which provides guidance or an affirmance to the user in the process of operating the wireless controlling device K, can be different types, such as an LCD displaying module, an alarm, a set of LED lights, etc. The indicator Cm4 can also be a combination of the above-mentioned types, for example an LCD displaying module showing the code and command inputted by the user so that the user may confirm if they are correct thereby. Besides, after the device receives the command and completes the operation, the alarm will generate a sound signal to notify the user.

Furthermore, when the interface device C undergoes a power cut, the EEPROM memory chip Cm2 is able to memorize the original working states of the bias circuits Cb1, Cb2, Cb3 therebefore. When the power is restored, the microprocessor Cm1 maintains the original working state according to the memory in the EEPROM memory chip 1e. Therefore, an impermissible user cannot avoid the I/O restriction by shutting down or restarting the computer.

When the user wants to release the restriction of the I/O port, he also needs to operate the wireless controlling device K. The user operates the equipment indicating key Ke for selecting the interface device C and operates the I/O port indicating key Kd for selecting the I/O ports. Then, the user inputs a specific code through the number key Ka and presses the open key Kc1 for generating a releasing signal, and these signals will be transmitted to the microprocessor Cm1 through the wireless receiver Cm3. The microprocessor Cm1 decodes the specific code and compares it with the default code stored in the EEPROM memory chip Cm2. If the specific code is matched with the default code, the microprocessor Cm1 will receive the releasing signal and turn off the bias circuit for returning to the working voltage level. Simultaneously, the indicator Cm4 will generate a sound signal to notify the user.

Generally, the EEPROM memory chip Cm2 stores a set of default codes for the user during the initial installation, and the user can change them by himself. When the user wants to change a controlling code of an I/O port, he can also operate the wireless controlling device K. Firstly, the user operates the equipment indicating key Ke for selecting the interface device C and operates the I/O port indicating key Kd for selecting the I/O ports. Secondly, the user inputs an altering command via the function key Kb, keys in the default code via the number key Ka and inputs a confirming command via the function key Kb. Finally, the user keys in the new code via the number key Ka and inputs the confirming command again via the function key Kb. The inputted signals are transmitted to the microprocessor Cm1, wherein the inputted default code will be compared with the default code stored in the EEPROM memory chip Cm2 thereby. If the comparison is affirmative, the microprocessor Cm1 will change the default code into the new code in the EEPROM memory chip Cm2. Simultaneously, the indicator Cm4 will generate a sound signal to notify the user so as to assist him to confirm that the code is indeed changed.

The above-mentioned controllable I/O equipments could be a PS/2 port A Cp1a, a PS/2 port B Cp1b, a USB port Cp2, an internet connection port Cp3, a COM port, a 1394 port, a PARALLEL port, a VGA port, an SCSI port, an AUDIO port, an IrDA port, a Cardbus, a PCMCIA port and a bluetooth port, etc.

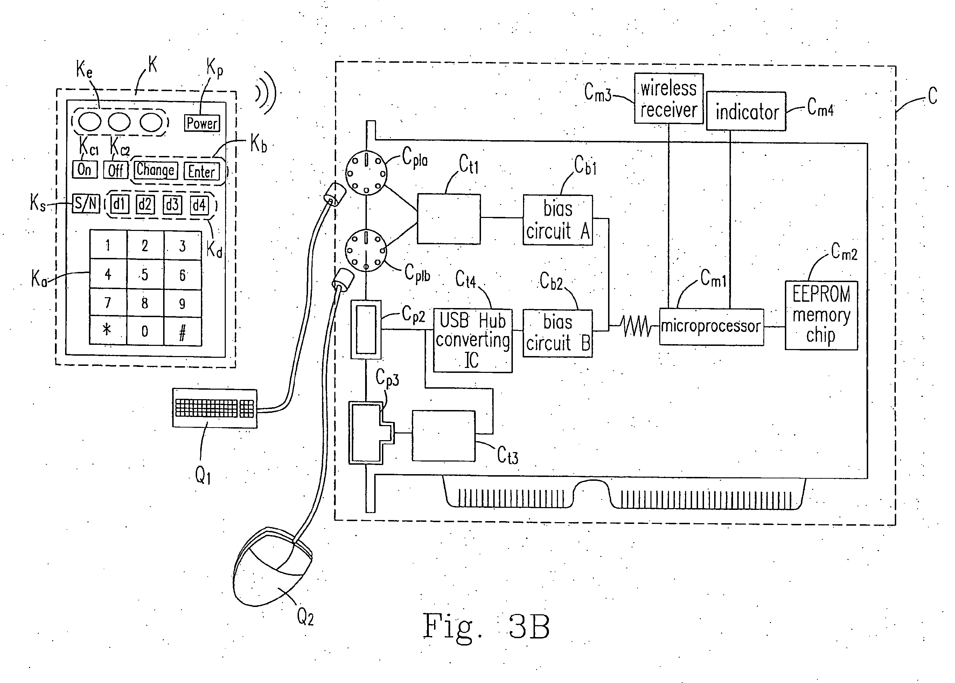

Please refer to Fig. 3B, which shows another schematic view of the central, controlling device according to a second preferred embodiment of the present invention, which alters the internet connection port Cp3 and the USB port Cp2 to electrically connect to a USB HUB converting IC Ct4, which serially and electrically connects to the bias circuit B Cb2 and the microprocessor Cm1. The microprocessor Cm1, receives the user command from the wireless controlling device K via the receiver Cm3, and then simultaneously controls the data transmission over the internet connection port Cp3 and the USB port Cp2 according to the above configuration. Similarly, the same configuration can extend to more than two sets of I/O port according this structure.

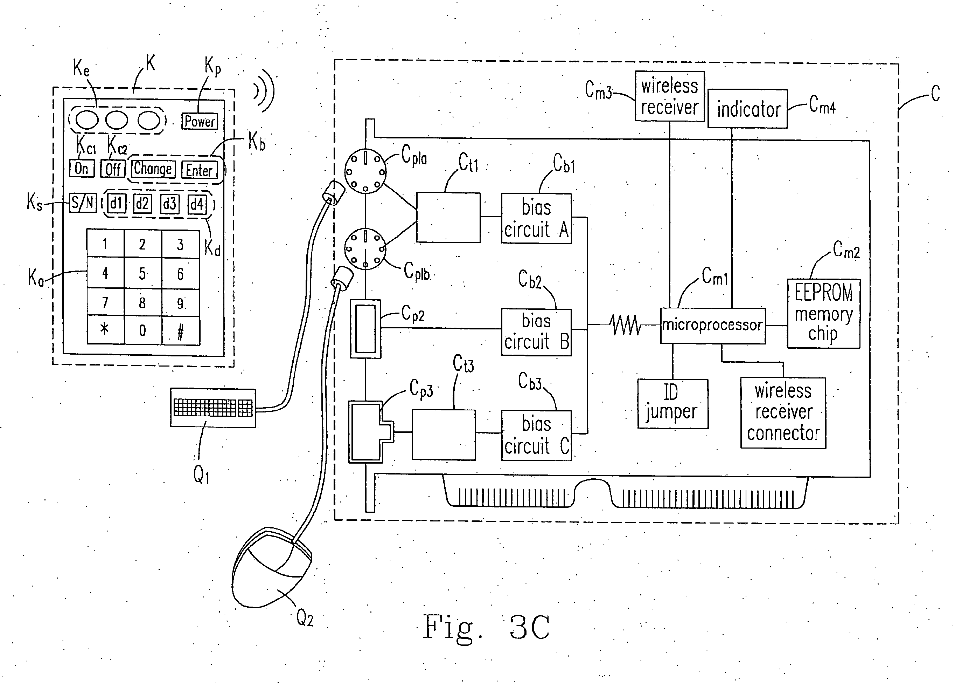

Please refer to Fig. 3C, which shows a further schematic view of the central controlling device according to a second preferred embodiment of the present invention. As the peripheral equipments are increasing, for controlling plural data transmission controllable interface devices simultaneously, a wireless receiver connector Cm6 and an ID jumper Cm5 are added. The user can give each interface device and I/O port an ID number by himself and use the equipment indicating key Ke on the wireless controlling device K to indicate any of the data transmission controllable interface devices. Then, the user gives the code and the operation order to the selected data transmission controllable interface device.

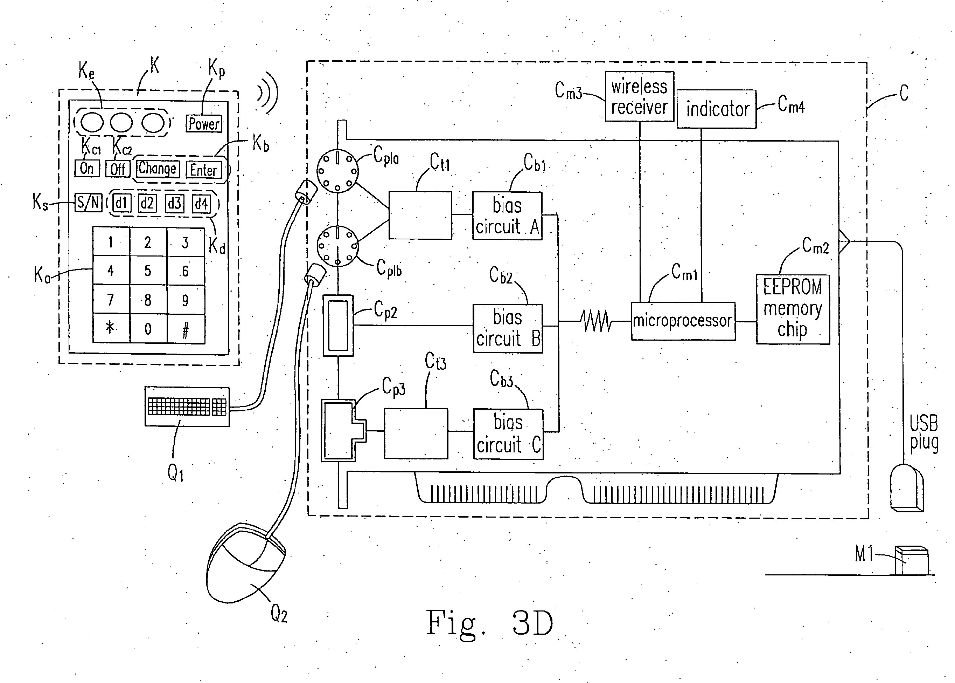

The above-mentioned central controlling devices according to the second preferred embodiment of the present invention use the converting ICs to transfer each I/O port into a USB port, which electrically connects to the data transmission restricting device for controlling the data transmission. Since, presently, the method, transferring the PCI port into the USB port, is a well-defined technique, further another central controlling device according to the second preferred embodiment as shown in Fig. 3D applies the method to make the interface device C become a USB HUB connecting to the Root-USB port of the computer main board.

Accordingly, the present invention can provide a well controlling for the peripheral equipments of the personal computer and an efficient security for the secret information and personal working state. It can also provide the protection and management for the computer users without interrupting their working procedures. By using the device and the method of the present invention, the computer user can remotely control a partial and the whole data transmission sate of the computer via a simple code operation for supplementing the short of the present data transmission restricting devices.

## Claims

1. A data transmission controlling device for controlling a data transmission of an electronic device (1g,2n,Q1,Q2), comprising:
a switch (1 a, 2a,K) generating a code and a switching signal;
a bias circuit (1f, 2e, Cb1, Cb2, Cb3) generating a bias voltage for the electronic device; and
a body (C) controlling the bias voltage generated by the bias circuit in response to the code and the switching signal received from the switch (1a, 2a, K).

2. A data transmission controlling device as claimed in Claim 1, wherein the body (C) further comprises:
a receiver (1c, 2b, Cm3) receiving the code and the switching signal from the wireless switch (1a, 2a, K);
a memory device (1e, 2d, Cm2) storing and providing a default code; and
a processing device (1d 2c, Cm1) decoding the code and the switching signal obtained from the receiver (1c, 2b, Cm3), checking if the code matches with the default code and generating a control signal for controlling.

3. A data transmission controlling device as claimed in Claim 2, wherein the memory device (1e, 2d, Cm2) further stores an operating state of the bias circuit (1f, 2e, Cb1, Cb2; Cb3) before a power off for restoring the operating state when rebooted.

4. A data transmission controlling device as claimed in Claim 2, wherein the switch (1a, 2a, K) is one of a wire switch and a wireless switch, has a keyboard (1b, Ka) and controls more than one body (C) simultaneously, wherein the default code stored in the memory device (1e, 2d, Cm2) can be changed via the keyboard (1b, Ka).

5. A data transmission controlling device as claimed in Claim 1 further comprising a power supply electrically connected with the electronic device, wherein the electronic device (1g, 2n, Q1,Q2) is one of a PS/2 device and a USB device.

6. A data transmission controlling device as claimed in Claim 1, wherein the switch (1a, 2a, K) is one of a wire switch and a wireless switch, has a keyboard (1b, Ka) and controls more than one of the body simultaneously.

7. A central controlling device for controlling a data transmission of a computer adapted to be electrically connected thereto, comprising:
an interface card (C), comprising:
at least one input/output terminal (Cp1a, Cp1b, Cp2, Cp3) electrically connected to the computer;
at least one control apparatus electrically connected to the at least one input/output terminal (Cp1a, Cp1b, Cp2, Cp3) and controlling the data transmission; and
an input device (K) generating a signal containing a code and a switching operation for switching the at least one control apparatus.

8. A central controlling device as claimed in Claim 7, wherein the at least one control apparatus further comprises:
a receiver (Cm3) receiving the signal;
a memory chip (Cm2) storing and providing a default code;
a bias circuit (Cb1, Cb2, Cb3) generating a bias voltage for the electronic device; and
a microprocessor (Cm1) decoding the signal obtained from the receiver (Cm3), checking if the code matches with the default code and controls the bias circuit based on the switching operation when the code matches with the default code,
wherein the memory chip (Cm2) further stores an operation condition of the bias circuit (Cb1, Cb2, Cb3) before powered off for restoring the operation condition when rebooted.

9. A central controlling device as claimed in Claim 8, wherein:
the input device (K) further comprises a keyboard (Ka), which the default code can be changed thereby, and/or controls a generation of the bias voltage based on the switching operation.

10. A central controlling device as claimed in Claim 7, wherein the input device (K) wirelessly switches on or off the at least one control apparatus.

11. A central controlling device as claimed in Claim 7, wherein a driver of the interface card (C) coercively switches a PS/2 device of the computer.

12. A method for centrally controlling a data transmission of a computer adapted to be electrically connected thereto, comprising steps of:
(A) coercively switching off a default input/output terminal for the data transmission on a main board of the computer;
(B) providing a computer interface card (C) having a specific input/output terminal (Cp1a, Cp1b; Cp2, Cp3) for subsitutely performing a function of the default input/output terminal; and
(C) switching on/off a bias voltage generation based on a signal containing a code and a switch command for controlling the specific input/output terminal (Cp1a, Cp1b, Cp2, Cp3) so that the data transmission is controlled.

13. A method as claimed in Claim 12, wherein the computer interface card comprises a transmission unit (Cm3), a control unit (Cm1), a memory unit (Cm2) and a bias circuit (Cb1, Cb2, Cb3).

14. A method as claimed in Claim.13 further comprising:
inputting the signal and changing a default code stored in the memory unit (Cm2) by the input unit (K).

15. A method as claimed in Claim 13 further comprising:
transmitting the signal from the input unit (K) to the control unit by the transmission unit (Cm3).

16. A method as claimed in Claim 12 further comprising:
decoding the signal by the control unit (Cm1), and checking if the code matches with the default code.

17. A method as claimed in Claim 16, wherein if the decoded code does match with the default code, the control unit (Cm1) switches the bias circuit (Cb1, Cb2, Cb3) according to the switch command.

18. A method as claimed in Claim 13, wherein the transmission of the signal is one of a wire and a wireless transmission.
